# EUROPÄISCHE PATENTSCHRIFT

(11) **EP 4 165 099 B1**
(45) Veröffentlichungstag und Bekanntmachung des Hinweises auf die Patenterteilung: **24.04.2024**
(21) Anmeldenummer: 21728944.6
(22) Anmeldetag: 04.06.2021
(51) Int. Cl.: C08G 18/10, C08G 18/30, C08G 18/48, C08G 18/72, C08G 18/76, C08G 18/79, C09J 175/08

(54) **POLYURETHANZUSAMMENSETZUNG MIT VERBESSERTER HAFTUNG AUF LACKIERTEN OBERFLÄCHEN**
POLYURETHANE COMPOSITION WITH IMPROVED ADHESION TO PAINTED SURFACES
COMPOSITION DE POLYURÉTHANE À ADHÉRENCE AMÉLIORÉE AUX SURFACES PEINTES

(30) Priorität: 12.06.2020 EP 20179659
(43) Veröffentlichungstag der Anmeldung: 19.04.2023
(73) Patentinhaber: Sika Technology AG, 6340 Baar (CH)
(72) Erfinder: GATTI, Michele, 5070 Frick (CH); ZÄCH, Martin, 8004 Zürich (CH)
(74) Vertreter: Sika Patent Attorneys
(86) Internationale Anmeldenummer: PCT/EP2021/065033
(87) Internationale Veröffentlichungsnummer: WO 2021/249889

(56) Entgegenhaltungen:
- WO-A1-2020/030606

## Beschreibung

### Technisches Gebiet

Die Erfindung betrifft feuchtigkeitshärtende, einkomponentige Polyurethan-Zusammensetzungen und ihre Anwendung als elastische Klebstoffe, Dichtstoffe und Beschichtungen, insbesondere auf Automobillack als Substrat.

### Stand der Technik

Polyurethan-Zusammensetzungen, welche durch Reaktion von Isocyanatgruppen mit Feuchtigkeit bzw. Wasser vernetzen und dabei zu Elastomeren aushärten, werden insbesondere als elastische Klebstoffe, Dichtstoffe oder Beschichtungen in der Bau- und Fertigungsindustrie eingesetzt, beispielsweise zur Verklebung von Bauteilen in der Montage, zur Verfüllung von Fugen, als Bodenbeschichtung oder als Dachabdichtung. Weiterhin finden sie als vielseitige Konstruktionsklebstoffe breite Verwendung, beispielsweise für den Einbau von Fensterscheiben in Transportmitteln wie Zügen oder Automobilen. Aufgrund ihrer guten Haftung und Elastizität können sie auf die Substrate einwirkende Kräfte, ausgelöst etwa durch Vibrationen oder Temperaturschwankungen, schonend dämpfen und überbrücken.

Polyurethan-Zusammensetzungen können als einkomponentige oder zweikomponentige Zusammensetzungen formuliert werden. Einkomponentige Polyurethan-Zusammensetzungen weisen den Vorteil auf, dass sie nicht vor oder während der Applikation vermischt werden müssen und sind deswegen bei vielen Anwendungen beliebter, und die Anwender dieser Verfahren schätzen die einfachere und fehlerresistentere Anwendung einkomponentiger Polyurethan-Klebstoffe.

Je nach Substrat, auf dem sie appliziert werden, stossen Polyurethan-Zusammensetzungen jedoch bezüglich Adhäsionsleistung manchmal an ihre Grenzen. Die Haftung auf modernen Automobillacken oder ähnlichen Lacken beispielsweise ist eine Herausforderung, da solche Lacke meist stark hydrophob sind und eine glatte, harte Oberfläche aufweisen. Die erfolgreiche Verklebung, beispielsweise von Windschutzscheiben, mit einer einkomponentigen Polyurethan-Zusammensetzung auf Automobillack hängt stark von der Qualität des Lacksubstrats, vom Substratvorbereitungsprozess und von den ausgewählten Bedingungen für die Verklebung ab. Der Untergrund kann je nach Lack von extrem einfach (kann mit fast jedem Klebstoff verklebt werden) bis extrem anspruchsvoll (gealtertes Material, verlängerte Backbedingungen bei hoher Temperatur, hoher Vernetzungsgrad) mehr oder weniger befriedigend verklebt werden. Einige besonders schwierige Lacke, die z.B. besonders Kratz- und Verschmutzungsresistent sind, können mit üblichen Polyurethan-Klebstoffen kaum noch oder gar nicht mehr verklebt werden. Additive, die die Haftung auf Lack verbessern, sind in der Literatur bekannt. Ihre Wirkung ist jedoch häufig begrenzt, und ihre Integration in genügender Menge in die Klebstoffmatrix kann zu Einschränkungen der mechanischen Eigenschaften führen (z. B. geringe Bruchdehnung).

Die Offenbarungen US2016002511 A1 und US9534073 B2 beispielsweise lehren die Bedeutung von HDI-Isocyanuraten und Biureten als Haftvermittler an beschichtetem Stahl an und identifizieren das Verhältnis zwischen aliphatischen und aromatischen Isocyanaten und die Katalysatorbeladung als Schlüsselparameter, um eine gute Haftung zu erhalten. Jedoch sind auch solche Systeme den schwierigsten modernen Automobillacken nicht immer ganz gewachsen.

Deswegen benötigen schwierig zu verklebende Lackoberflächen üblicherweise eine aufwändige Vorbehandlung, beispielsweise in Form von mechanischer Vorbehandlung wie abschleifen oder aufrauen, oder eine chemisch-physikalische Vorbehandlung in Form eines Primers, Aktivators oder Haftvermittlers. Dies ist jedoch beispielsweise in Transportmittel- oder Automobilfertigungslinien nicht immer möglich, da die Lösungsmittel, die meist in Vorbehandlungsmitteln enthalten sind in der Fertigungslinie problematisch sind. In allen Fällen sind solche Vorbehandlungen zeit- und kostenintensiv und daher unerwünscht.

Es besteht daher das Bedürfnis nach einer einkomponentigen Polyurethan-Zusammensetzung, welche selbst schwierigste Automobillacke problemlos verkleben kann und dafür vor dem Verkleben keine besondere mechanische oder chemisch-physikalische Vorbehandlung der Lackoberfläche benötigt.

### Darstellung der Erfindung

Aufgabe der vorliegenden Erfindung ist es daher, feuchtigkeitshärtende, einkomponentige Polyurethan-Zusammensetzungen zur Verfügung zu stellen, welche die Nachteile des Standes der Technik überwinden.

Die Aufgabe wird mit der feuchtigkeitshärtenden, einkomponentigen Polyurethan-Zusammensetzung gemäss Anspruch 1 gelöst. Sie enthält mindestens ein Isocyanatgruppen-haltiges Polyetherurethan-Polymer, mindestens ein Isocyanurat-haltiges Trimer von 1-Isocyanato-3,3,5-trimethyl-5-isocyanatomethylcyclohexan oder 1,6-Hexandiisocyanat in einer Menge enthalten in der Zusammensetzung von zwischen 1 und 4 Gewichts-%, sowie mindestens einen Polyether mit blockierten Hydroxylgruppen, welcher frei ist von Isocyanatgruppen, als Weichmacher, in einer Menge enthalten in der Zusammensetzung von mehr als 5 Gewichts-%.

Die erfindungsgemässe Zusammensetzung hat in bevorzugten Ausführungsformen einen Gehalt an monomeren Diisocyanaten von unter 0.1 %; sie ist damit auch ohne besondere Schutzvorkehrungen sicher in der Handhabung und kann in vielen Ländern ohne Gefahrenkennzeichnung verkauft werden. Überraschenderweise verfügt die erfindungsgemässe Zusammensetzung in allen Ausführungsformen über eine ausgezeichnete Adhäsion auf hochkratzfesten, hydrophoben Automobillacken auch ohne vorhängige Vorbehandlung der Lackoberflächen, hohe Wärmestabilität der Verklebung und nach der Aushärtung über eine hohe Zugfestigkeit und Elastizität, was für viele Anwendungen sehr vorteilhaft ist. Diese vorteilhaften Eigenschaften konnten aus dem Stand der Technik nicht erwartet werden.

Die erfindungsgemässe feuchtigkeitshärtende Polyurethan-Zusammensetzung ist unter Ausschluss von Feuchtigkeit hervorragend lagerstabil, gut verarbeitbar und verfügt über eine lange Offenzeit bei schneller Aushärtung. Dabei entsteht ein elastisches Material von hoher Zugfestigkeit bei hoher Dehnbarkeit, exzellenten Haftungseigenschaften auch auf schwierigsten Lacksubstraten und hoher Stabilität gegenüber Wärme.

Die feuchtigkeitshärtende Polyurethan-Zusammensetzung ist besonders geeignet für die Verwendung als elastischer Klebstoff, elastischer Dichtstoff oder elastische Beschichtung, insbesondere elastischer Klebstoff in einer Transportmittel-Fertigungslinie.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine feuchtigkeitshärtende, einkomponentige Polyurethan-Zusammensetzung enthaltend
- mindestens ein Isocyanatgruppen-haltiges Polyetherurethan-Polymer erhalten aus der Umsetzung von mindestens einem Polyisocyanat mit mindestens einem Polyetherpolyol;
- mindestens ein Isocyanurat-haltiges Trimer I von 1-Isocyanato-3,3,5-trimethyl-5-isocyanatomethylcyclohexan oder 1,6-Hexandiisocyanat in einer Menge enthalten in der Zusammensetzung von zwischen 1 und 4 Gewichts-%;
- mindestens ein Polyether mit blockierten Hydroxylgruppen, welcher frei ist von Isocyanatgruppen, als Weichmacher, in einer Menge enthalten in der Zusammensetzung von mehr als 5 Gewichts-%.

Als "monomeres Diisocyanat" wird eine organische Verbindung mit zwei Isocyanatgruppen, die durch einen zweiwertigen Kohlenwasserstoff-Rest mit 4 bis 15 C-Atomen getrennt sind, bezeichnet.

Als "Polyetherurethan-Polymer" wird ein Polymer bezeichnet, welches als Repetiereinheiten Ethergruppen aufweist und zusätzlich Urethangruppen enthält.

Mit "Poly" beginnende Substanznamen wie Polyol bezeichnen Substanzen, die formal zwei oder mehr der in ihrem Namen vorkommenden funktionellen Gruppen pro Molekül enthalten.

Als "blockierte Hydroxylgruppe" wird eine durch chemische Reaktion zu einer gegenüber Isocyanatgruppen nicht reaktiven Gruppe umgesetzte Hydroxylgruppe bezeichnet.

Als "Weichmacher" wird eine bei Raumtemperatur flüssige Substanz bezeichnet, welche nach der Aushärtung der Zusammensetzung unverändert in dieser verbleibt und die ausgehärtete Zusammensetzung weicher macht.

Als "NCO-Gehalt" wird der Gehalt an Isocyanatgruppen in Gewichts-% bezeichnet.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt, insbesondere mit Tetrahydrofuran als mobiler Phase, Brechungsindex-Detektor und Auswertung ab 200 g/mol.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Das Isocyanatgruppen-haltige Polyetherurethan-Polymer gemäss Anspruch 1 kann auch als Polyurethan-Prepolymer bezeichnet werden.

Bevorzugt hat das Isocyanatgruppen-haltige Polyetherurethan-Polymer ein mittleres Molekulargewicht Mₙ im Bereich von 1'500 bis 20'000 g/mol, bevorzugt 2'500 bis 15'000 g/mol, insbesondere 3'500 bis 10'000 g/mol.

Bevorzugt hat das Isocyanatgruppen-haltige Polyetherurethan-Polymer einen NCO-Gehalt im Bereich von 0.5 bis 6 Gewichts-%, besonders bevorzugt 0.6 bis 4 Gewichts-%, mehr bevorzugt 1 bis 3 Gewichts-%, insbesondere 1.2 bis 2.5 Gewichts-%.

Bevorzugt weist das Isocyanatgruppen-haltige Polyetherurethan-Polymer als Repetiereinheiten 1,2-Ethylenoxy-, 1,2-Propylenoxy-, 1,3-Propylenoxy-, 1,2-Butylenoxy- oder 1,4-Butylenoxy-Gruppen auf. Bevorzugt sind 1,2-Ethylenoxy- und 1,2-Propylenoxy-Gruppen.

Besonders bevorzugt weist es als Repetiereinheiten mehrheitlich oder ausschliesslich 1,2-Propylenoxy-Gruppen auf.

Ein besonders bevorzugtes Isocyanatgruppen-haltiges Polyetherurethan-Polymer weist im Polyethersegment 80 bis 100 Gewichts-% 1,2-Propylenoxy-Gruppen und 0 bis 20 Gewichts-% 1,2-Ethylenoxy-Gruppen auf.

Für den Fall, dass auch 1,2-Ethylenoxy-Gruppen vorhanden sind, bilden die 1,2-Propylenoxy-Gruppen und die 1,2-Ethylenoxy-Gruppen insbesondere jeweils homogene Blöcke und die Poly(1,2-ethylenoxy)-Blöcke befinden sich an den Kettenenden. Ein solches Polymer ermöglicht feuchtigkeitshärtende Polyurethan-Zusammensetzungen mit besonders schneller Aushärtung und besonders guter Hitzestabilität.

Die bevorzugten Isocyanatgruppen-haltigen Polyetherurethan-Polymere ermöglichen hochwertige, gut verarbeitbare feuchtigkeitshärtende Polyurethan-Zusammensetzungen mit hoher Festigkeit, Dehnbarkeit und Elastizität.

Als monomere Diisocyanate geeignet sind handelsübliche aromatische oder aliphatische Diisocyanate, wie insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), Naphthalin-1,5-diisocyanat (NDI), 1,6-Hexandiisocyanat (HDI), 2,2(4),4-Trimethyl-1,6-hexamethylendiisocyanat (TMDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder -4,4'-diphenylmethandiisocyanat (HMDI), 1,3- oder 1,4-Bis(isocyanatomethyl)cyclohexan, m- oder p-Xylylendiisocyanat (XDI), oder Gemische davon.

Das für die Umsetzung verwendete monomere Diisocyanat ist bevorzugt 4,4'-Diphenylmethandiisocyanat (4,4'-MDI), 2,4-Toluylendiisocyanat oder Gemische davon mit 2,6-Toluylendiisocyanat (TDI), 1-Isocyanato-3,3,5-trimethyl-5-isocyanatomethylcyclohexan (IPDI) oder 1,6-Hexandiisocyanat (HDI). Bevorzugt ist auch eine Kombination aus zwei oder mehr dieser monomeren Diisocyanate.

Besonders bevorzugt ist 4,4'-MDI. Dabei ist das 4,4'-MDI von einer Qualität, welche nur geringe Anteile an 2,4'- und/oder 2,2'-Diphenylmethandiisocyanat enthält und bei Raumtemperatur fest ist. Es ermöglicht feuchtigkeitshärtende Polyurethan-Zusammensetzungen mit besonders schneller Aushärtung und besonders hoher Festigkeit bei hoher Dehnbarkeit und Elastizität.

Bevorzugt ist das 4,4'-MDI destilliert und weist eine Reinheit von mindestens 95 %, insbesondere mindestens 97.5 %, auf.

Ein kommerziell erhältliches 4,4'-Diphenylmethandiisocyanat dieser Qualität ist beispielsweise Desmodur^{®} 44 MC (von Covestro) oder Lupranat^{®} MRSS oder ME (von BASF) oder Suprasec^{®} 1400 (von Huntsman).

Weiterhin besonders bevorzugt ist 1-Isocyanato-3,3,5-trimethyl-5-isocyanatomethylcyclohexan (IPDI). Auf IPDI basierende feuchtigkeitshärtende Polyurethan-Zusammensetzungen verfügen über hohe Festigkeiten bei hoher Dehnbarkeit und Elastizität und ermöglichen Produkte mit besonders hoher Witterungsstabilität.

Das Polyetherpolyol hat bevorzugt ein mittleres Molekulargewicht Mₙ im Bereich von 1'000 bis 15'000 g/mol, besonders bevorzugt 1'500 bis 12'000 g/mol, insbesondere 2'000 bis 8'000 g/mol.

Das Polyetherpolyol hat bevorzugt eine OH-Zahl im Bereich von 8 bis 112 mg KOH/g, besonders bevorzugt im Bereich von 10 bis 75 mg KOH/g, insbesondere im Bereich von 12 bis 56 mg KOH/g.

Das Polyetherpolyol hat bevorzugt eine mittlere OH-Funktionalität im Bereich von 1.7 bis 3.

Geeignet als Polyetherpolyol sind Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen.

Besonders bevorzugt sind Polyoxypropylen-Diole, Polyoxypropylen-Triole, oder Ethylenoxid-terminierte Polyoxypropylen-Diole oder -Triole. Dies sind Polyoxyethylenpolyoxypropylen-Mischpolyole, die insbesondere dadurch erhalten werden, dass Polyoxypropylen-Diole oder -Triole nach Abschluss der Polypropoxylierungsreaktion mit Ethylenoxid weiter alkoxyliert werden und dadurch schliesslich primäre Hydroxylgruppen aufweisen.

Bevorzugte Polyetherpolyole weisen einen Ungesättigtheitsgrad von weniger als 0.02 mEq/g, insbesondere weniger als 0.01 mEq/g auf.

In einer Ausführungsform bevorzugt ist ein Trimethylolpropan oder insbesondere Glycerin gestartetes, gegebenenfalls Ethylenoxid-terminiertes Polyoxypropylen-Triol mit einer OH-Zahl im Bereich von 20 bis 42 mg KOH/g, insbesondere 22 bis 35 mg KOH/g, und einer mittleren OH-Funktionalität im Bereich von 2.2 bis 3.0, bevorzugt 2.2 bis 2.8, insbesondere 2.2 bis 2.6.

In einer weiteren Ausführungsform bevorzugt ist ein Polyoxypropylen-Diol mit einer OH-Zahl im Bereich von 8 bis 112 mg KOH/g, bevorzugt im Bereich von 10 bis 75 mg KOH/g, insbesondere im Bereich von 12 bis 56 mg KOH/g.

Die Umsetzung wird bevorzugt unter Feuchtigkeitsausschluss bei einer Temperatur im Bereich von 20 bis 160 °C, insbesondere 40 bis 140 °C, durchgeführt, gegebenenfalls in Anwesenheit geeigneter Katalysatoren.

In bevorzugten Ausführungsformen hat das Isocyanatgruppen-haltige Polyetherurethan-Polymer einen Gehalt an monomeren Diisocyanaten von höchstens 0.5 Gewichts-%, bevorzugt höchstens 0.3 Gewichts-%, insbesondere höchstens 0.2 Gewichts-%. Diese Ausführungsformen weisen überraschend gute Adhäsionseigenschaften auf und sind besonders einfach applizierbar und besitzten besonders gute mechanische Eigenschaften.

In diesen Ausführungsformen liegt das NCO/OH-Verhältnis bei der Umsetzung zwischen dem monomeren Diisocyanat mit dem Polyetherpolyol insbesondere im Bereich von 3/1 bis 10/1, besonders bevorzugt im Bereich von 3/1 bis 8/1, insbesondere im Bereich von 4/1 bis 7/1.

Nach der Umsetzung wird das im Reaktiongemisch verbleibende monomere Diisocyanat in diesen Ausführungsformen bis auf den beschriebenen Restgehalt mittels eines geeigneten Trennverfahrens entfernt.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugtist ein mehrstufiges Verfahren, bei welchem das monomere Diisocyanat in einem Kurzwegverdampfer bei einer Manteltemperatur im Bereich von 120 bis 200 °C und einem Druck von 0.001 bis 0.5 mbar entfernt wird.

Im Fall des als monomeres Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird mit einer Manteltemperatur im Bereich von 160 bis 200 °C bei 0.001 bis 0.5 mbar gefahren und das entfernte Monomer bei einer Temperatur im Bereich von 40 bis 60 °C kondensiert.

Im Fall des als monomeres Diisocyanat bevorzugten IPDI liegt die Manteltemperatur bevorzugt im Bereich von 140 bis 180 °C.

Bevorzugt erfolgen die Umsetzung des monomeren Diisocyanats mit dem Polyetherpolyol und gegebenenfalls das anschliessende Entfernen des Grossteils des im Reaktionsgemisch verbliebenen monomeren Diisocyanats ohne den Einsatz von Lösemitteln bzw. Schleppmitteln.

Bevorzugt wird das nach der Umsetzung gegebenenfalls entfernte monomere Diisocyanat anschliessend wiederverwendet, d.h. erneut für die Herstellung von Isocyanatgruppen-haltigem Polyetherurethan-Polymer eingesetzt.

Bei der Umsetzung reagieren die OH-Gruppen des Polyetherpolyols mit den Isocyanatgruppen des monomeren Diisocyanats. Dabei kommt es auch zu sogenannten Kettenverlängerungsreaktionen, indem OH-Gruppen und/oder Isocyanatgruppen von Umsetzungsprodukten zwischen Polyol und monomerem Diisocyanat reagieren. Je höher das NCO/OH-Verhältnis gewählt wird, desto weniger Kettenverlängerungsreaktionen finden statt, und desto niedriger ist die Polydispersität und somit die Viskosität des erhaltenen Polymers. Ein Mass für die Kettenverlängerungsreaktion ist das mittlere Molekulargewicht des Polymers bzw. die Breite und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren Diisocyanat.

Bevorzugt beträgt der NCO-Gehalt des Polyetherurethan-Polymers mindestens 80%, insbesondere mindestens 85%, des theoretischen NCO-Gehalts, welcher aus der Addition von einem mol monomerem Diisocyanat pro mol OH-Gruppen des Polyetherpolyols berechnet wird. Ein solches Polyetherurethan-Polymer ist besonders niedrigviskos und ermöglicht feuchtigkeitshärtende Polyurethan-Zusammensetzungen mit besonders guten Applikationseigenschaften.

Ein besonders bevorzugtes Polyetherurethan-Polymer hat einen NCO-Gehalt im Bereich von 1 bis 2.5 Gewichts-%, insbesondere 1.1 bis 2.1 Gewichts-%, und einen Gehalt an monomeren Diisocyanaten von höchstens 0.3 Gewichts-%, insbesondere höchstens 0.2 Gewichts-%, und wird erhalten aus der Umsetzung von 4,4'-MDI oder IPDI mit einem gegebenenfalls Ethylenoxid-terminierten Polyoxypropylen-Triol mit einer mittleren OH-Funktionalität im Bereich von 2.2 bis 3, bevorzugt 2.2 bis 2.8, insbesondere 2.2 bis 2.6, und einer OH-Zahl im Bereich von 20 bis 42 mg KOH/g, insbesondere im Bereich von 22 bis 35 mg KOH/g. Ein solches Polymer ermöglicht eine besonders attraktive Kombination aus niedriger Viskosität, langer Offenzeit bei schneller Aushärtung und hoher Dehnbarkeit und Elastizität und eine hohe Festigkeit.

Ein weiteres besonders bevorzugtes Polyetherurethan-Polymer hat einen NCO-Gehalt im Bereich von 0.8 bis 2.4 Gewichts-%, insbesondere 1.2 bis 2.1 Gewichts-%, und einen Gehalt an monomeren Diisocyanaten von höchstens 0.3 Gewichts-%, insbesondere höchstens 0.2 Gewichts-%, und ist erhalten aus der Umsetzung von 4,4'-MDI mit einem Polyoxyproylen-Diol mit einer OH-Zahl im Bereich von 13 bis 38 mg KOH/g, insbesondere 22 bis 32 mg KOH/g. Ein solches Polymer ist besonders niedrigviskos und ist insbesondere geeignet für die Kombination mit einer Isocyanatgruppen-haltigen Verbindung mit einer NCO-Funktionalität von mindestens 2.2, insbesondere einem oligomeren Isocyanat oder einem entsprechenden Isocyanatgruppen-haltigen Polymer. Es ermöglicht eine besonders hohe Dehnbarkeit und Elastizität.

Bevorzugt enthält die feuchtigkeitshärtende Polyurethan-Zusammensetzung 25 bis 60 Gewichts-%, besonders bevorzugt 30 bis 55 Gewichts-%, insbesondere 35 bis 50 Gewichts-%, Isocyanatgruppen-haltiges Polyetherurethan-Polymer, insbesondere mit einem Gehalt an monomeren Diisocyanaten von höchstens 0.5 Gewichts-%, bevorzugt höchstens 0.4 Gewichts-%, insbesondere höchstens 0.2 Gewichts-%.

Die feuchtigkeitshärtende Polyurethan-Zusammensetzung enthält weiterhin mindestens ein Isocyanurat-haltiges Trimer I von 1-Isocyanato-3,3,5-trimethyl-5-isocyanatomethylcyclohexan (IPDI) oder 1,6-Hexandiisocyanat (HDI) in einer Menge enthalten in der Zusammensetzung von zwischen 1 und 4 Gewichts-%. Andere oligomere Isocyanate haben sich als weit weniger geeignet erwiesen.

Geeignete oligomere Isocyanate sind insbesondere HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane), sowie IPDI-Isocyanurate wie beispielsweise in Lösung als Desmodur^{®} Z 4470 (von Covestro) oder in fester Form als Vestanat^{®} T1890/ 100 (von Evonik). Bevorzugt sind HDI-Isocyanurat-haltige Trimere.

Die Menge an Isocyanurat-haltigem Trimer I liegt zwischen 1 und 4 Gewichts-%, bezogen auf die Zusammensetzung. Unterhalb von 1 Gewichts-% ist die Haftung auf Automobillacken ungenügend, und oberhalb von 4 Gewichts-% wird eine ungenügende Mechanik der Zusammensetzung erhalten, wobei insbesondere die elastischen Eigenschaften rasch abnehmen. Bevorzugt liegt der Gehalt an Isocyanurat-haltigem Trimer I zwischen 1.25 und 3.5 Gewichts-%, besonders bevorzugt zwischen 1.5 und 3 Gewichts-%. In diesem Bereich sind die Hafteigenschaften auf Automobillacken besonders gut und die mechanischen Eigenschaften wie Zugfestigkeit und Dehnbarkeit der ausgehärteten Zusammensetzung für einen elastischen Klebstoff ideal.

Die feuchtigkeitshärtende Polyurethan-Zusammensetzung enthält weiterhin mindestens einen Polyether mit blockierten Hydroxylgruppen, welcher frei ist von Isocyanatgruppen, als Weichmacher, in einer Menge enthalten in der Zusammensetzung von mehr als 5 Gewichts-%.

Die Hydroxylgruppen des Polyethers sind insbesondere so blockiert, dass dieser vor und während der Aushärtung der Polyurethan-Zusammensetzung keine chemischen Reaktionen eingeht, also unverändert in der ausgehärteten Zusammensetzung verbleibt.

Für den Fall, dass die feuchtigkeitshärtende Polyurethan-Zusammensetzung blockierte Amine wie insbesondere Oxazolidine oder Aldimine enthält, ist der Polyether mit blockierten Hydroxylgruppen bevorzugt frei von Acetoestergruppen.

Bevorzugt ist der Polyether mit blockierten Hydroxylgruppen bei Raumtemperatur flüssig.

Bevorzugt weist der Polyether mit blockierten Hydroxylgruppen eine Viskosität bei 20 °C im Bereich von 30 bis 5'000 mPa·s, mehr bevorzugt 40 bis 2'000 mPa s, besonders bevorzugt 50 bis 1'000 mPas, insbesondere 50 bis 500 mPas, auf. Dabei wird die Viskosität bestimmt mit einem Kegel-Platten-Viskosimeter mit einem Kegeldurchmesser 25 mm, Kegelwinkel 1°, Kegelspitze-Platten-Abstand 0.05 mm bei einer Scherrate von 10 s⁻¹.

Bevorzugt sind die blockierten Hydroxylgruppen ausgewählt aus Ester-, Acetoester-, Carbonat-, Acetal- und Urethangruppen. Bevorzugt sind Ester-, Acetoester-, Carbonat- oder Urethangruppen. Zu diesen Gruppen sind Hydroxylgruppen besonders einfach umsetzbar, und sie sind besonders stabil und verträglich mit Polyetherurethan-Polymeren.

Besonders bevorzugt sind Ester-, Carbonat- oder Urethangruppen, insbesondere Ester- oder Urethangruppen. Diese Gruppen sind auch in Zusammensetzungen, welche blockierte, mittels Hydrolyse freisetzbare Amine wie Oxazolidine oder Aldimine enthalten, stabil und reagieren bei der Aushärtung der Zusammensetzung nicht mit den daraus freigesetzten Aminen.

Am meisten bevorzugt sind Estergruppen, insbesondere Acetatgruppen. Diese ermöglichen eine besonders niedrige Viskosität und sind einfach zugänglich. Besonders bevorzugt ist eine Estergruppe, insbesondere eine Estergruppe mit 1 bis 8 C-Atomen, insbesondere eine Acetatgruppe oder Benzoatgruppe. Diese sind besonders einfach herstellbar.

Am meisten bevorzugt ist eine Acetatgruppe. Ein Polyether mit blockierten Hydroxylgruppen in Form von Acetatgruppen ist besonders niedrigviskos, ganz besonders einfach herstellbar und besonders preisgünstig.

Weiterhin bevorzugt ist eine Urethangruppe, insbesondere eine Phenylurethangruppen oder eine p-Toluolsulfonylurethangruppe. Ein Polyether mit solchen blockierten Hydroxylgruppen weist eine handhabbare Viskosität auf und ist besonders einfach herstellbar.

Bevorzugt als Acetoestergruppe ist eine Acetoacetatgruppe, aber nur für den Fall, dass die Zusammensetzung frei von blockierten, mittels Hydrolyse freisetzbaren Amine ist.

Bevorzugt als Carbonatgruppe eine Methylcarbonatgruppe.

Bevorzugt als Acetalgruppe ist eine 1,4-Dimethyl-2-oxa-pentoxygruppe, eine 2-Oxa-cyclopentyloxygruppe oder eine 2-Oxacyclohexyloxygruppe, insbesondere eine 1,4-Dimethyl-2-oxa-pentoxygruppe.

Bevorzugt weist der Polyether mit blockierten Hydroxylgruppen als Repetiereinheiten 1,2-Ethylenoxy-, 1,2-Propylenoxy-, 1,3-Propylenoxy-, 1,2-Butylenoxy- oder 1,4-Butylenoxy-Gruppen, insbesondere 1,2-Propylenoxy-Gruppen, auf. Bevorzugt bestehen mindestens 70 %, insbesondere mindestens 80 %, der Repetiereinheiten aus 1,2-Propylenoxy-Gruppen und gegebenenfalls höchstens 30 %, insbesondere höchstens 20 %, der Repetiereinheiten aus 1,2-Ethylenoxy-Gruppen.

Besonders bevorzugt bestehen die Repetiereinheiten zu 100 % aus 1,2-Propylenoxy-Gruppen. Dies ermöglicht Polyurethan-Zusammensetzungen mit besonders guter Hydrolysebeständigkeit.

Besonders bevorzugt ist der Polyether mit blockierten Hydroxylgruppen abgeleitet von einem hydroxyfunktionellen Polyether mit einer mittleren OH-Funktionalität im Bereich von 1 bis 3, insbesondere 1 bis 2.

Geeignet als hydroxyfunktioneller Polyether mit einer OH-Funktionalität von 1 sind insbesondere sogenannte Polyoxypropylen-Monole.

Bevorzugt als Starter für Polyoxypropylen-Monole sind Methanol, Ethanol, Propanol, Isopropanol, Butanol, Isobuanol, tert.Butanol, Pentanol, Hexanol, 2-Ethylhexanol, Laurylalkohol, Myristylalkohol, Palmitylalkohol, Allylalkohol, Cyclohexanol, Benzylalkohol oder Phenol, insbesondere Methanol, Ethanol oder Butanol, am meisten bevorzugt Butanol.

Geeignet als hydroxyfunktioneller Polyether mit einer OH-Funktionalität von > 1 sind insbesondere sogenannte Polyoxypropylen-Polyole.

Bevorzugt als Starter für Polyoxypropylen-Polyole sind 1,2-Ethandiol, 1,2-Propandiol, 1,3-Propandiol, 1,4-Butandiol, Trimethylolpropan, Glycerin, Pentaerythrit, 1,2,3,4-Butantetrol (Threit oder Erythrit), 1,2,3,4,5-Pentanpentol (Xylit) oder 1,2,3,4,5,6-Hexanhexol (Mannit oder Sorbit), besonders bevorzugt 1,2-Ethandiol, 1,2-Propandiol, 1,3-Propandiol, 1,4-Butandiol, Trimethylolpropan, oder Glycerin, insbesondere 1,2-Propandiol oder Glycerin, am meisten bevorzugt 1,2-Propandiol.

Bevorzugt weist der Polyether mit blockierten Hydroxylgruppen ein mittleres Molekulargewicht Mₙ im Bereich von 600 bis 15'000 g/mol, besonders bevorzugt 700 bis 10'000 g/mol, mehr bevorzugt 900 bis 5'000 g/mol, insbesondere 900 bis 2'500 g/mol auf, bestimmt mittels Gelpermeationschromatographie (GPC) gegen Polystyrol als Standard mit Tetrahydrofuran als mobiler Phase, Brechungsindex-Detektor und Auswertung ab 200 g/mol.

Damit werden feuchtigkeitshärtende Polyurethan-Zusammensetzungen mit besonders hoher Dehnbarkeit und Elastizität erhalten. Insbesondere verfügen solche Zusammensetzungen über eine lange Verarbeitungszeit (Offenzeit) bei schneller Aushärtung und eine hohe Kälteflexibilität.

In einer bevorzugten Ausführungsform ist der Polyether mit blockierten Hydroxylgruppen abgeleitet von einem Butanol-gestarteten Polyoxypropylen-Monol mit einer OH-Zahl im Bereich von 25 bis 90 mg KOH/g, bevorzugt im Bereich von 50 bis 80 mg KOH/g. Damit werden feuchtigkeitshärtende Polyurethan-Zusammensetzungen mit besonders guter Verarbeitbarkeit und besonders hoher Kälteflexibilität erhalten. Bevorzugt steht die blockierte Hydroxylgruppe dabei für eine Acetatgruppe.

In einer weiteren bevorzugten Ausführungsform ist der Polyether mit blockierten Hydroxylgruppen abgeleitet von einem Polyoxypropylen-Diol mit einer OH-Zahl im Bereich von 12 bis 125 mg KOH/g, bevorzugt im Bereich von 22 bis 125 mg KOH/g, insbesondere im Bereich von 45 bis 125 mg KOH/g. Damit werden feuchtigkeitshärtende Polyurethan-Zusammensetzungen mit sehr guter Verarbeitbarkeit und guter Kälteflexibilität erhalten. Bevorzugt stehen die blockierten Hydroxylgruppen dabei für Acetatgruppen.

In einer weiteren bevorzugten Ausführungsform ist der Polyether mit blockierten Hydroxylgruppen abgeleitet von einem Trimethylolpropan oder insbesondere Glycerin gestarteten, gegebenenfalls Ethylenoxid-terminierten Polyoxypropylen-Triol mit einer mittleren OH-Funktionalität im Bereich von 2.2 bis 3 und einer OH-Zahl im Bereich von 22 bis 56 mg KOH/g.

Der Polyether mit blockierten Hydroxylgruppen wird insbesondere erhalten durch Umsetzung von mindestens einem hydroxyfunktionellen Polyether mit mindestens einem geeigneten Blockierungsmittel für Hydroxylgruppen.

Für die Umsetzung wird das Blockierungsmittel mindestens stöchiometrisch in Bezug auf die Hydroxylgruppen eingesetzt. Für die Blockierung werden für die jeweiligen Reaktivgruppen übliche Verfahren eingesetzt, gegebenenfalls unter Mitverwendung von Katalysatoren oder Lösemitteln. Falls bei der Blockierungsreaktion Abspalter entstehen, werden diese mit einer geeigneten Methode aus der Reaktionsmischung entfernt, insbesondere mittels Destillation.

Als Blockierungsmittel geeignet sind nucleophile Verbindungen, welche mit Hydroxylgruppen eine Additions- oder Substitutionsreaktion eingehen.

Geeignet sind insbesondere Carbonsäuren, Carbonsäurechloride, Carbonsäureester oder Carbonsäureanhydride, Diketen, 2,2,5-Trimethyl-4H-1,3-dioxin-4-on, tert.Butylacetoacetat, Dialkylcarbonate, Monoisocyanate, (Meth)acrylamide, Methylenmalonate oder Cyanacrylate.

Bevorzugt sind Carbonsäuren, Carbonsäurechloride, Carbonsäureester oder Carbonsäureanhydride, wobei blockierte Hydroxylgruppen in Form von Estergruppen entstehen. Davon bevorzugt sind Carbonsäureanhydride oder Carbonsäureester, insbesondere Essigsäureanhydrid.

Im Fall von Essigsäureanhydrid als Blockierungsmittel wird bei der Umsetzung Essigsäure abdestilliert, wobei blockierte Hydroxylgruppen in Form von Acetatgruppen entstehen.

Im Fall von Isopropenylacetat als Blockierungsmittel wird bei der Umsetzung Aceton abdestilliert, wobei ebenfalls blockierte Hydroxylgruppen in Form von Acetatgruppen entstehen.

Bevorzugt sind weiterhin Diketen, 2,2,5-Trimethyl-4H-1,3-dioxin-4-on oder sterisch gehinderte kleine Acetoester wie insbesondere tert.Butylacetoacetat, wobei blockierte Hydroxylgruppen in Form von Acetoestergruppen entstehen.

Bevorzugt sind weiterhin Dialkylcarbonate, wobei blockierte Hydroxylgruppen in Form von Carbonatgruppen entstehen.

Bevorzugt sind weiterhin Monoisocyanate, wobei blockierte Hydroxylgruppen in Form von Urethangruppen entstehen. Bevorzugt sind Phenylisocyanat oder p-Toluolsulfonylisocyanat.

Als hydroxyfunktioneller Polyether geeignet sind insbesondere solche mit einer OH-Funktionalität im Bereich von 1 bis 3 und einem mittleren Molekulargewicht Mₙ im Bereich von 600 bis 15'000 g/mol, besonders bevorzugt 700 bis 10'000 g/mol, mehr bevorzugt 900 bis 5'000 g/mol, insbesondere 900 bis 2'500 g/mol.

Bevorzugt sind Polyoxypropylen-Monole mit einer OH-Zahl im Bereich von 25 bis 90 mg KOH/g, bevorzugt im Bereich von 50 bis 80 mg KOH/g, insbesondere Alkohol-gestartete Polyoxypropylen-Monole, insbesondere gestartet von Methanol, Ethanol, Propanol, Isopropanol, Butanol, Isobutanol, tert.Butanol, Pentanol, Hexanol, 2-Ethylhexanol, Laurylalkohol, Myristylalkohol, Palmitylalkohol, Allylalkohol, Cyclohexanol, Benzylalkohol oder Phenol. Davon bevorzugt sind Alkylalkohol-gestartete Polyoxypropylenmonole, insbesondere gestartet von Methanol, Ethanol oder Butanol. Besonders bevorzugt sind Butanol-gestartete Polyoxypropylen-Monole mit einem mittleren Molekulargewicht Mₙ im Bereich von 650 bis 2'000 g/mol, insbesondere 700 bis 1'500 g/mol. Butanol-gestartete Polyoxypropylen-Monole sind kommerziell erhältlich, beispielsweise als Synalox^{®} 100-20B, Synalox^{®} 100-40B oder Synalox^{®} 100-85B (alle von Dow). Weiterhin bevorzugt sind Polyoxypropylen-Diole mit einer OH-Zahl im Bereich von 12 bis 125 mg KOH/g, bevorzugt im Bereich von 22 bis 125 mg KOH/g, insbesondere im Bereich von 45 bis 125 mg KOH/g.

Weiterhin bevorzugt sind Trimethylolpropan- oder insbesondere Glycerin-gestartete Polyoxypropylen-Triole mit einer OH-Zahl im Bereich von 22 bis 56 mg KOH/g, welche gegebenenfalls Anteile von 1,2-Ethylenoxygruppen enthalten.

Bevorzugt enthält die feuchtigkeitshärtende Polyurethan-Zusammensetzung 7.5 bis 40 Gewichts-%, insbesondere 10 bis 25 Gewichts-%, Polyether mit blockierten Hydroxylgruppen. Eine solche Zusammensetzung verfügt über eine gute Verarbeitbarkeit und eine hohe Dehnbarkeit bei hoher Festigkeit und eine besonders gute Haftung auf Automobillacken.

Die feuchtigkeitshärtende Polyurethan-Zusammensetzung kann zusätzlich weitere Isocyanatgruppen-haltige Polymere enthalten, insbesondere bezogen auf das Polyetherurethan-Polymer geringere Anteile von Isocyanatgruppen-haltige Polymeren basierend auf Polyester-Polyolen oder Polybutadien-Polyolen.

Bevorzugt enthält die feuchtigkeitshärtende Polyurethan-Zusammensetzung zusätzlich mindestens einen weiteren Bestandteil ausgewählt aus Katalysatoren und Füllstoffen.

Geeignete Katalysatoren sind Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Bevorzugt sind Calciumcarbonate, welche gegebenenfalls mit Fettsäuren, insbesondere Stearaten, beschichtet sind, calcinierte Kaoline oder industriell hergestellte Russe.

Die erfindungsgemässe Zusammensetzung enthält bevorzugt zwischen 15 und 30 Gewichts-% Russ, bezogen auf die gesamte Zusammensetzung.

Als Russ geeignet sind alle gängigen industriellen Russe (carbon black), welche in Polyurethanzusammensetzungen verwendet werden können und dem Fachmann bekannt sind.

Die Verwendung von Russ in der angegebenen Menge bringt den Vorteil, dass die Zusammensetzung mechanisch (insbesondere bezüglich Zugfestigkeit und E-Modul) stärker wird und weiterhin die Bildung von Blasen bei der Aushärtung vermindert wird. Im angegebenen Bereich ist zudem die Applikation noch einfach genug, dass die Zusammensetzung auch manuell appliziert werden kann. Bei höheren Russanteilen kann die Masse rasch verdicken.

Die feuchtigkeitshärtende Polyurethan-Zusammensetzung kann weitere Zusätze enthalten, insbesondere
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Trocknungsmittel, insbesondere Molekularsiebpulver, Calciumoxid, hochreaktive Isocyanate wie p-Tosylisocyanat, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- blockierte Amine, insbesondere Oxazolidine oder Aldimine, insbesondere Di- oder Trialdimine;
- weitere Weichmacher, insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononyl-1,2-cyclohexandicarboxylat (DINCH), Terephthalate, insbesondere Bis(2-ethylhexyl)terephthalat oder Diisononylterephthalat, hydrierte Terephthalate, insbesondere hydriertes Bis(2-ethylhexyl)terephthalat oder Diisononylterephthalat bzw. Bis(2-ethylhexyl)-1,4-cyclohexandicarboxylat, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl;
- weitere Katalysatoren, welche die Reaktion der Isocyanatgruppen beschleunigen, insbesondere Salze, Seifen oder Komplexe von Zinn, Zink, Bismut, Eisen, Aluminium, Molybdän, Dioxomolybdän, Titan, Zirkonium oder Kalium, insbesondere Zinn(II)-2-ethylhexanoat, Zinn(II)-neodecanoat, Zink(II)-acetat, Zink(II)-2-ethylhexanoat, Zink(II)-laurat, Zink(II)-acetylacetonat, Aluminiumlactat, Aluminiumoleat, Diisopropoxytitan-bis-(ethylacetoacetat) oder Kaliumacetat; tertiäre Aminogruppen enthaltende Verbindungen, insbesondere N-Ethyldiisopropylamin, N,N,N',N'-Tetramethylalkylendiamine, Pentamethylalkylentriamine und höhere Homologe davon, Bis-(N,N-diethylaminoethyl)-adipat, Tris(3-dimethylaminopropyl)amin, 1,4-Diazabicyclo[2.2.2]octan (DABCO), 1,8-Diazabicyclo[5.4.0]undec-7-en (DBU), 1,5-Diazabicyclo[4.3.0]-non-5-en (DBN), N-Alkylmorpholine, N,N'-Dimethylpiperazin; stickstoffaromatische Verbindungen wie 4-Dimethylaminopyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert. Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylenglykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Netzmittel, Verlaufmittel, Entschäumer, Entlüfter, Stabilisatoren gegen Oxidation, Wärme, Licht oder UV-Strahlung oder Biozide; oder weitere üblicherweise in feuchtigkeitshärtenden Polyurethan-Zusammensetzungen eingesetzte Substanzen.

Es kann sinnvoll sein, gewisse Substanzen vor dem Einmischen in die Zusammensetzung chemisch oder physikalisch zu trocknen.

Bevorzugt enthält die erfindungsgemässe Zusammensetzung zusätzlich mindestens einen weiteren Weichmacher, insbesondere ein Phthalat, bevorzugt in einer Menge von zwischen 1 und 15 Gewichts-%, bevorzugt zwischen 1 und 10 Gewichts-%, bezogen auf die gesamte Zusammensetzung. Die Verwendung weiterer Weichmacher hat den Vorteil, dass die Formulierung günstiger wird, einfacher zu formulieren (mischen) und zu applizieren wird, und verbesserte mechanische Eigenschaften (insbesondere Bruchdehnung) aufweist.

Überraschenderweise wurde gefunden, dass die Verwendung von bis zu 15 Gewichts-% weitere Weichmacher die Adhäsion auf schwierig zu verklebenden Substraten nicht beeinträchtigt.

Als weitere Weichmacher geeignet sind alle gängigen Weichmacher im Gebiet der Polyurethanformulierung, insbesondere die weiter oben in der Aufzählung als weitere Weichmacher genannten. Bevorzugte weitere Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononyl-1,2-cyclohexandicarboxylat (DINCH), Terephthalate, insbesondere Bis(2-ethylhexyl)terephthalat oder Diisononylterephthalat, sowie Adipate, insbesondere Dioctyladipat.

Beim Herstellen der erfindungsgemässen Polyurethan-Zusammensetzung wird der Gehalt an monomeren Diisocyananten beim Vermischen des Isocyanatgruppen-haltigen Polyetherurethan-Polymers mit weiteren Bestandteilen der Zusammensetzung, insbesondere Füllstoffen, durch Reaktion mit vorhandener Feuchtigkeit gegebenenfalls weiter reduziert, was vorteilhaft sein kann.

Bevorzugt enthält die feuchtigkeitshärtende Polyurethan-Zusammensetzung
- 35 bis 60 Gewichts-% Isocyanatgruppen-haltiges Polyetherurethan-Polymer;
- 6 bis 25 Gewichts-% Polyether mit blockierten Hydroxylgruppen;
- 0 bis 15 Gewichts-% weitere Weichmacher, insbesondere Phthalate,
- 1 bis 3.5 Gewichts-% Isocyanurat-haltiges Trimer I;
- 20 bis 60 Gewichts-% Füllstoffe, insbesondere umfassend Russ;
und gegebenenfalls weitere Bestandteile enthält, insbesondere Katalysatoren, Stabilisatoren, Thixotropiermittel sowie blockierte Amine.

Die feuchtigkeitshärtende Polyurethan-Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, ein Kanister, eine Büchse, ein Beutel, ein Schlauchbeutel, eine Kartusche oder eine Tube dar.

Die feuchtigkeitshärtende Polyurethan-Zusammensetzung ist einkomponentig. Als "einkomponentig" wird eine Zusammensetzung bezeichnet, bei welcher alle Bestandteile der Zusammensetzung im gleichen Gebinde vorliegen und welche als solche lagerstabil ist.

Sie ist bei geeigneter Verpackung und Aufbewahrung lagerstabil, typischerweise während mehreren Monaten bis zu einem Jahr oder länger.

Bei der Applikation der feuchtigkeitshärtenden Polyurethan-Zusammensetzung beginnt der Prozess der Aushärtung. Als Ergebnis davon entsteht die ausgehärtete Zusammensetzung.

Die erfindungsgemässe einkomponentige Zusammensetzung wird als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator und/oder einen Härter enthält oder freisetzt, zugemischt werden, oder die Zusammensetzung kann nach ihrer Applikation mit einer solchen Beschleuniger-Komponente in Kontakt gebracht werden.

Bei der Aushärtung reagieren die Isocyanatgruppen unter dem Einfluss von Feuchtigkeit untereinander. Für den Fall, dass die feuchtigkeitshärtende Polyurethan-Zusammensetzung ein blockiertes Amin enthält, reagieren die Isocyanatgruppen zudem mit den hydrolysierenden blockierten Aminogruppen. Die Gesamtheit dieser zur Aushärtung der Zusammensetzung führenden Reaktionen der Isocyanatgruppen wird auch als Vernetzung bezeichnet.

Die zur Aushärtung der feuchtigkeitshärtenden Polyurethan-Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung ("Haut"). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die feuchtigkeitshärtende Polyurethan-Zusammensetzung wird bevorzugt bei Umgebungstemperatur appliziert, insbesondere im Bereich von etwa -10 bis 50°C, bevorzugt im Bereich von -5 bis 45°C, insbesondere 0 bis 40°C.

Die Aushärtung der feuchtigkeitshärtenden Polyurethan-Zusammensetzung erfolgt bevorzugt ebenfalls bei Umgebungstemperatur.

Die feuchtigkeitshärtende Polyurethan-Zusammensetzung verfügt über eine lange Verarbeitungszeit (Offenzeit) und eine schnelle Aushärtung.

Als "Offenzeit" wird die Zeitspanne bezeichnet, während der die Zusammensetzung nach der Applikation ohne Einbussen in ihrer Funktionsfähigkeit verarbeitet oder nachbearbeitet werden kann. Für den Fall, dass die Zusammensetzung als Klebstoff verwendet wird, bezeichnet die Offenzeit insbesondere auch die Zeitspanne, innerhalb welcher eine Verklebung nach ihrer Applikation gefügt sein muss, um eine genügende Haftung aufzubauen. Bei einer einkomponentigen Zusammensetzung ist die Offenzeit spätestens dann überschritten, wenn es zur Hautbildung gekommen ist.

Als "Aushärtegeschwindigkeit" wird das Ausmass der Polymerbildung in der Zusammensetzung innerhalb einer gegebenen Zeitspanne nach der Applikation bezeichnet, beispielsweise indem die Dicke der gebildeten Haut bestimmt wird.

Bevorzugt weist die feuchtigkeitshärtende Polyurethan-Zusammensetzung nach der Aushärtung eine Zugfestigkeit von mindestens 7 MPa, bevorzugt mindestens 8 MPa, insbesondere mindestens 9 MPa, auf, bestimmt gemäss DIN EN 53504 bei einer Zuggeschwindigkeit von 200 mm/min, insbesondere wie in den Beispielen beschrieben.

Bevorzugt weist die feuchtigkeitshärtende Polyurethan-Zusammensetzung nach der Aushärtung weiterhin eine Bruchdehnung von mindestens 300 %, insbesondere mindestens 400 %, auf, bestimmt gemäss DIN EN 53504 bei einer Zuggeschwindigkeit von 200 mm/min, insbesondere wie in den Beispielen beschrieben.

Bevorzugt weist die feuchtigkeitshärtende Polyurethan-Zusammensetzung nach der Aushärtung weiterhin einen E-Modul von mindestens 7 MPa, insbesondere mindestens 8 MPa, auf, bestimmt bei 0.5 - 5% Dehnung gemäss DIN EN 53504 bei einer Zuggeschwindigkeit von 200 mm/min, insbesondere wie in den Beispielen beschrieben.

Bevorzugt wird die feuchtigkeitshärtende Polyurethan-Zusammensetzung verwendet als elastischer Klebstoff oder elastischer Dichtstoff oder elastische Beschichtung.

Als Klebstoff und/oder Dichtstoff ist die feuchtigkeitshärtende Polyurethan-Zusammensetzung insbesondere geeignet für Klebe- und Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen.

Als Dichtstoff ist die feuchtigkeitshärtende Polyurethan-Zusammensetzung insbesondere geeignet für das elastische Abdichten von Fugen, Nähten oder Hohlräumen aller Art, insbesondere von Fugen am Bau wie Dilatationsfugen oder Anschlussfugen zwischen Bauteilen, oder von Bodenfugen im Tiefbau. Insbesondere für das Abdichten von Dilatationsfugen an Bauwerken ist ein Dichtstoff mit weichelastischen Eigenschaften und hoher Kälteflexibilität besonders geeignet.

Als Beschichtung ist die feuchtigkeitshärtende Polyurethan-Zusammensetzung insbesondere geeignet zum Schutz und/oder zum Abdichten von Bauwerken oder Teilen davon, insbesondere für Balkone, Terrassen, Dächer, insbesondere Flachdächer oder schwach geneigte Dachfläche oder Dachgärten, oder im Innern von Gebäuden unter Fliesen oder Keramikplatten in Nasszellen oder Küchen, oder in Auffangwannen, Kanälen, Schächten, Silos, Tänken oder Abwasserbehandlungsanlagen.

Sie kann auch zu Reparaturzwecken als Abdichtung oder Beschichtung verwendet werden, beispielsweise von undichten Dachmembranen oder nicht mehr tauglichen Bodenbelägen oder als Reparaturmasse für hochreaktive Spritzabdichtungen.

Die feuchtigkeitshärtende Polyurethan-Zusammensetzung kann so formuliert sein, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, beispielsweise in Form einer Raupe, wobei diese eine im Wesentlichen runde oder dreieckige Querschnittsfläche aufweisen kann.

Die feuchtigkeitshärtende Polyurethan-Zusammensetzung kann weiterhin so formuliert sein, dass sie flüssig und sogenannt selbstverlaufend oder nur leicht thixotrop ist und zur Applikation ausgegossen werden kann. Als Beschichtung kann sie beispielsweise anschliessend flächig bis zur erwünschten Schichtdicke verteilt werden, beispielsweise mittels einer Rolle, einem Schieber, einer Zahntraufel oder einer Spachtel. Dabei wird in einem Arbeitsgang typischerweise eine Schichtdicke im Bereich von 0.5 bis 3 mm, insbesondere 1.0 bis 2.5 mm, aufgetragen.

Geeignete Substrate, welche mit der feuchtigkeitshärtenden Polyurethan-Zusammensetzung verklebt oder abgedichtet oder beschichtet werden können, sind insbesondere
- Glas, Glaskeramik, Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke, und insbesondere auch hochkratzfeste, hydrophobe Automobillacke.

Die Substrate können bei Bedarf vor dem Applizieren vorbehandelt werden, insbesondere durch physikalische und/oder chemische Reinigungsverfahren oder das Aufbringen eines Aktivators oder eines Primers. Dies ist jedoch nicht bevorzugt und die erfindungsgemässe Zusammensetzung haftet auch ohne solche Vorbehandlungsschritte.

Verklebt und/oder abgedichtet werden können zwei gleichartige oder zwei verschiedene Substrate.

Ein weiterer Gegenstand der Erfindung ist ein Verfahren zum Verkleben oder Abdichten, umfassend die Schritte
(i) Applizieren der feuchtigkeitshärtenden Polyurethan-Zusammensetzung
   - auf ein erstes Substrat und Kontaktieren der Zusammensetzung mit einem zweiten Substrat innerhalb der Offenzeit der Zusammensetzung, oder
   - auf ein erstes und auf ein zweites Substrat und Fügen der beiden Substrate innerhalb der Offenzeit der Zusammensetzung, oder
   - zwischen zwei Substrate,
(ii) Aushärten der Zusammensetzung durch Kontakt mit Feuchtigkeit.

In bevorzugten Ausführungsformen dieses Verfahrens ist eines der Substrate eine mit Automobillack lackierte Oberfläche und/oder vor dem Applizieren der Polyurethan-Zusammensetzung wird ausser einer optionalen Reinigung keine Vorbehandlung an diesem Substrat durchgeführt.

Ein weiterer Gegenstand der Erfindung ist ein Verfahren zum Beschichten oder Abdichten, umfassend die Schritte
(i) Applizieren der feuchtigkeitshärtenden Polyurethan-Zusammensetzung auf ein Substrat,
(ii) Aushärten der Zusammensetzung durch Kontakt mit Feuchtigkeit.

Aus der Applikation und Aushärtung der feuchtigkeitshärtenden Polyurethan-Zusammensetzung bzw. aus dem Verfahren zum Verkleben oder Abdichten oder dem Verfahren zum Beschichten oder Abdichten wird ein Artikel erhalten, welcher mit der Zusammensetzung verklebt oder abgedichtet oder beschichtet ist. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, oder ein Anbauteil davon.

Ein weiterer Gegenstand der Erfindung ist somit ein Artikel, erhalten aus dem beschriebenen Verfahren zum Verkleben oder Abdichten oder aus dem beschriebenen Verfahren zum Beschichten oder Abdichten.

Die feuchtigkeitshärtende, einkomponentige Polyurethan-Zusammensetzung weist vorteilhafte Eigenschaften auf.

Sie besitzt hervorragende Adhäsionseigenschaften, insbesondere auch auf schwierig zu verklebenden Lacksubstraten wie hochkratzfestem, hydrophobem Automobillack.

Weiterhin besitzt sie eine sehr gute Hitzestabilität im ausgehärteten Zustand und verliert die Adhäsion nicht unter längerer Wärmeeinwirkung.

Sie ist in bevorzugten Ausführungsformen aufgrund des geringen Gehalts an monomeren Diisocyanaten auch ohne besondere Schutzvorkehrungen sicher in der Handhabung und benötigt in Bezug auf die monomerem Diisocyanate keine Gefahrenkennzeichnung.

Weiterhin ist die Zusammensetzung unter Ausschluss von Feuchtigkeit sehr lagerstabil, sehr gut applizierbar und verfügt über eine lange Verarbeitungszeit (Offenzeit) bei überraschend schneller Aushärtung. Dabei entsteht ein elastisches Material von überraschend hoher Zugfestigkeit bei hoher Dehnbarkeit, mit hoher Kälteflexibilität, guten Haftungseigenschaften und hoher Stabilität gegenüber Hitze und Feuchtigkeit.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich.

### Herstellung von Polyethern mit blockierten Hydroxylgruppen:

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Echte und Pseudo-Kopplungsmuster wurden nicht unterschieden.

### Polymerer Weichmacher PL1:

*Butanol-gestartetes acetyliertes PPG-Monol mit mittlerem Molekulargewicht Mₙ ca. 790 g*/*mol.*

120.00 g Butanol-gestartetes Polyoxypropylen-Monol (Synalox^{®} 100-20B, mittleres Molekulargewicht Mₙ ca. 750 g/mol; von Dow) und 18.74 g Essigsäureanhydrid wurden in einem Rundkolben mit Destillieraufsatz unter Stickstoffatmosphäre vorgelegt. Dann wurde die Reaktionsmischung bei 130 °C unter leichtem Stickstoffstrom gerührt, wobei als Destillat Essigsäure aufgefangen wurde. Anschliessend wurden bei 80°C und 10 mbar Vakuum die flüchtigen Bestandteile aus der Reaktionsmischung entfernt. Es wurde eine klare, farblose Flüssigkeit mit einer Viskosität von 74 mPa·s bei 20 °C erhalten.

FT-IR: 2970, 2931, 2867, 1738, 1454, 1372, 1345, 1296, 1241, 1098, 1014, 959, 925, 866, 827.

¹H-NMR (CDCl₃): 5.02 (hept., 1 H, CH₂(CH₃)C*H*-OAc), 3.75 - 3.34 (2 x m, ca. 39 H, OC*H*₂C*H*(CH₃)O), 3.33 - 3.28 (m, 2 H, CH₃CH₂CH₂C*H*₂O), 2.04 (s, 3H, O(CO)C*H*₃), 1.55 (quint., 2 H, CH₃CH₂C*H*₂CH₂O), 1.36 (sext., 2 H, CH₃C*H*₂CH₂CH₂O), 1.22 (d, 3 H, CH₂(C*H*₃)CH-OAc), 1.17 - 1.10 (m, ca. 36 H, OCH₂CH(C*H*₃)O), 0.91 (t, 3 H, C*H*₃CH₂CH₂CH₂O).

### Herstellung von Isocyanatgruppen-haltigen Polymeren:

Die **Viskosität** wurde mit einem thermostatisierten (20+C, falls nichts anderes angegeben) Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹ (oder, falls so angegeben, 50 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Polymer P1:

6950 g Polyoxypropylenpolyoxyethylentriol (Caradol^{®} MD34-02, Shell Chemicals Ltd., UK; OH-Zahl 35.0 mg KOH/g), 1145 g 4,4'-Methylendiphenyldiisocyanat (4,4'-MDI; Desmodur^{®} 44 MC L, Bayer MaterialScience AG) und 203 g Diisodecylphthalat (DIDP; Palatinol^{®} Z, BASF SE, Deutschland) wurden nach bekanntem Verfahren bei 80 °C zu einem NCO-terminierten Polyurethanpolymer mit einem Isocyanatgruppen-Gehalt von 2.38 Gewichts-% umgesetzt. Die Viskosität betrug 50-60 Pa s bei 20°C mit 50s⁻¹.

### Polymer P2:

400 g Polyoxypropylen-Diol (Acclaim^{®} 4200, von Covestro AG; OH-Zahl 28.5 mg KOH/g) und 52 g 4,4'-Diphenylmethandiisocyanat (Desmodur^{®} 44 MC L, von Covestro AG) wurden nach bekanntem Verfahren bei 80 °C zu einem bei Raumtemperatur flüssigen, NCO-terminierten Polyurethanpolymer mit einem Isocyanatgruppen-Gehalt von 1.85 Gewichts-% umgesetzt. Die Viskosität betrug 30-40 Pa s bei 20°C mit 50s⁻¹.

### Polymer P3:

682.9 g Polyether-Triol Voranol^{®} CP 4755 und 317.0 g 4,4'-Diphenylmethandiisocyanat (Desmodur^{®} 44 MC L, von Covestro) wurden nach bekanntem Verfahren bei 80 °C zu einem Polyetherurethan-Polymer mit einem NCO-Gehalt von 8.8 Gewichts-%, einer Viskosität von 5.1 Pa s bei 20 °C und einem Gehalt an monomerem 4,4'-Diphenylmethandiisocyanat von ca. 25 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180 °C, Druck 0.1 bis 0.005 mbar, Kondensationstemperatur 47°C). Das so erhaltene Polyetherurethan-Polymer wies einen NCO-Gehalt von 2.0 Gewichts-%, eine Viskosität von 16.8 Pa s bei 20 °C, einen Gehalt an monomerem 4,4'-Diphenylmethandiisocyanat von 0.05 Gewichts-% und ein mittleres Molekulargewicht von ca. 5'700 g/mol auf.

### Polymer P4:

727.0 g Acclaim^{®} 4200 (Polyoxypropylen-Diol, OH-Zahl 28.0 mg KOH/g; von Covestro) und 273.0 g 4,4'-Diphenylmethandiisocyanat (Desmodur^{®} 44 MC L, von Covestro) wurden nach bekanntem Verfahren bei 80 °C zu einem Polyetherurethan-Polymer mit einem NCO-Gehalt von 7.6 Gewichts-%, einer Viskosität von 5.2 Pa s bei 20 °C und einem Gehalt an monomerem 4,4'-Diphenylmethandiisocyanat von ca. 18 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180 °C, Druck 0.1 bis 0.005 mbar, Kondensationstemperatur 47°C). Das so erhaltene Polyetherurethan-Polymer wies einen NCO-Gehalt von 1.8 Gewichts-%, eine Viskosität von 15.2 Pa.s bei 20 °C und einen Gehalt an monomerem 4,4'-Diphenylmethandiisocyanat von 0.08 Gewichts-% auf.

Feuchtigkeithärtende Polyurethan-Zusammensetzungen:

### Zusammensetzungen Z1 bis Z14:

Für jede Zusammensetzung wurden die in den Tabellen 1 bis 3 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt und unter Feuchtigkeitsausschluss aufbewahrt. Jede Zusammensetzung wurde folgendermassen geprüft:
Als Mass für die mechanischen Eigenschaften und für die Stabilität gegenüber Hitze und Hydrolyse wurde jede Zusammensetzung zwischen zwei wachsbeschichteten Transferdruckpapieren zu einem Film von 2 mm Dicke verpresst und während 7 Tagen im Normklima gelagert. Nach Entfernen der Wachspapiere wurden einige Hanteln mit einer Länge von 75 mm bei einer Steglänge von 30 mm und einer Stegbreite von 4 mm aus dem Film ausgestanzt. Damit wurden die **Zugfestigkeit,** die **Bruchdehnung** und das **E-Modul** bei 0.5-5% bzw. Dehnung gemäss DIN EN 53504 bei einer Zuggeschwindigkeit von 200 mm/min bestimmt. Diese Resultate sind mit dem Zusatz "***7d NK**"* versehen. Zusätzlich wurden weitere ausgestanzte Hanteln während 7 Tagen in einem Umluftofen bei 90 °C gelagert, im Normklima abgekühlt und auf die bereits beschriebene Weise auf Zugfestigkeit, Bruchdehnung und E-Modul geprüft. Diese Resultate sind mit dem Zusatz "***7d 90°C*"** versehen.

Zur Bestimmung des **G-Moduls** (Schubmoduls) wurden die Proben nach DIN 54 451 nach 7 Tagen Lagerung bei Raumtemperatur und 50% relativer Luftfeuchtigkeit bei 23°C und 50% relativer Luftfeuchtigkeit gemessen. Die hierfür verwendeten Aluminiumsubstrate wurden vor der Verklebung mit Sika^{®} Primer 204N, erhältlich bei Sika Schweiz AG, vorbehandelt.

Die Resultate der obengenannten Messmethoden sind in Tabelle 4 angegeben.

Zur Bestimmung der **Adhäsion** wurden verschiede Automobillack-Substrate mittels Heptan-getränktem Zellulosetuch (Tela^{®}, Tela-Kimberly Switzerland GmbH) gereinigt. Innert 10 Minuten wurde anschliessend eine Dreiecksraupe (Höhe 12 mm, Breite 8 mm) von der zu prüfenden Zusammensetzung mittels Auspress-kartusche und Düse aufgetragen und mit einer Polypropylenfolie auf eine Dicke von 4-5 mm verpresst.

Der Klebstoff wurde nach einer Aushärtezeit von 7 Tagen (,7d RT') bzw. 14 Tagen (,14d RT') Normalklimaraumlagerung (23°C, 50% rel. Luftfeuchtigkeit), sowie nach einer anschliessenden Lagerung bei 40°C (,7d 40°C, 100% r.h.') und 100% rel. Luftfeuchtigkeit während 7 Tagen, sowie mit derselben Lagerung nach 14 Tagen (,14d 40°C, 100% r.h.') und 21 Tagen (,21d 40°C, 100% r.h.'), getestet.

Die Haftung des Klebstoffes wurde jeweils mittels ,Raupentest' getestet. Hierbei wird die ausgehärtete Klebstoffschicht am Ende knapp über der Klebefläche eingeschnitten. Das eingeschnittene Ende der Schicht wird mit einer Rundzange festgehalten und vom Untergrund gezogen. Dies geschieht durch vorsichtiges Aufrollen der Klebstoffschicht auf die Zangenspitze, sowie Platzieren eines Schnittes senkrecht zur Ziehrichtung bis auf den blanken Untergrund. Die Abziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Klebstoffschicht auf dem Untergrund zurückbleibende Klebstoff (Kohäsionsbruch). Die Bewertung der Hafteigenschaften erfolgt durch visuelle Bestimmung des kohäsiven Anteils der Haftfläche:
Je höher der Anteil an kohäsivem Bruch ist, umso besser wird die Verklebung eingeschätzt. Testresultate mit Kohäsionsbruch-Anteilen von weniger als 60 %, insbesondere weniger als 50 %, gelten typischerweise als ungenügend.

Als Substratuntergrund wurden mit Automobillacken lackierte Stahlbleche verwendet. Die Klebstoffe wurden direkt auf die Lackoberfläche aufgetragen. Als Lacksubstrate wurden verwendet:
- iGloss^{®} HAPS (BASF, Deutschland)
- iGloss^{®} (BASF, Deutschland)
- Axalta^{®} Lumeera (Axalta Coating Systems, USA)

Alle Substratuntergründe wurden unmittelbar vor der Applikation der Haftvermittlerzusammensetzung durch Abwischen mittels eines Zellulosetuches (Tela^{®}, Tela-Kimberly Switzerland GmbH), welches mit Heptan getränkt wurde, gereinigt und mindestens 5 Minuten vor der Applikation der Haftvermittlerzusammensetzung abgelüftet sowie anschliessend mit einem Zellulosetuch trockengewischt ("wipe on/ wipe off").

Die Resultate sind in den Tabellen 5 und 6 angegeben.

Die Zusammensetzungen **Z2, Z3, Z5** und **Z6** sind erfindungsgemässe Beispiele. Die Zusammensetzungen **Z1, Z4** und **Z7** bis **Z14** sind Vergleichsbeispiele und versehen mit dem Zusatz "(Ref.)". Die Vergleichsbeispiele **Z1** und **Z7** bis **Z10** und **Z12** bis **Z14** enthalten keinen Polyether mit blockierten Hydroxylgruppen (Weichmacher **PL1)** und das Vergleichsbeispiel **Z4** enthält zu wenig Isocyanurat **I. Z11** enthält zu wenig Weichmacher **PL1.**

**Tabelle 1: Zusammensetzung (in Gewichtsteilen) von Z1 bis Z3.**

| **Zusammensetzung** | **Z1** (Ref.) | **Z2** | **Z3** |
|---|---|---|---|
| Polymer **P1** | 14 | 14 | 14 |
| Polymer **P2** | 31 | 31 | 31 |
| DIDP | 15 | 5 | - |
| Weichmacher **PL1** | - | 10 | 15 |
| Isocyanurat **I1** | 2 | 2 | 2 |
| Trockungsmittel ⁴ | 0.1 | 0.1 | 0.1 |
| Russ ¹ | 20 | 20 | 20 |
| Kaolin ² | 17 | 17 | 17 |
| Katalysator ³ | 0.8 | 0.8 | 0.8 |

| | | | |
|---|---|---|---|
| ¹ Monarch 570 (von Cabot) ² White Tex (von BASF) ³ 2,2'-Dimorpholinodiethylether und Dibutylzinndilaurat (10:1 Gewichtsverhältnis als Mischung zu 10 Gewichts-% in DIDP) ⁴ p-Toluolsulfonylisocyanat | | | |

**Tabelle 2: Zusammensetzung (in Gewichtsteilen) von Z4 bis Z9.**

| **Zusammensetzung** | **Z4** (Ref.) | **Z5** | **Z6** | **Z7** (Ref.) | **Z8** (Ref.) | **Z9** (Ref.) |
|---|---|---|---|---|---|---|
| Polymer **P3** | 14 | 14 | 14 | 14 | 16 | 18 |
| Polymer **P4** | 31 | 31 | 31 | 31 | 34 | 37 |
| DIDP | - | - | - | 15 | 10 | 5 |
| Weichmacher **PL1** | 15 | 15 | 15 | - | - | - |
| Isocyanurat **I1** | 0.9 | 3.5 | 2 | 2 | 2 | 2 |
| Trockungsmittel ⁴ | 0.1 | 0.1 | 0.1 | 0.1 | 0.1 | 0.1 |
| Russ ¹ | 20 | 20 | 20 | 20 | 20 | 20 |
| Kaolin ² | 17 | 17 | 17 | 17 | 17 | 17 |
| Katalysator ³ | 0.8 | 0.8 | 0.8 | 0.8 | 0.8 | 0.8 |

| | | | | | | |
|---|---|---|---|---|---|---|
| ¹ Monarch 570 (von Cabot) ² White Tex (von BASF) ³ 2,2'-Dimorpholinodiethylether und Dibutylzinndilaurat (10:1 Gewichtsverhältnis als Mischung zu 10 Gewichts-% in DIDP) ⁴ p-Toluolsulfonylisocyanat | | | | | | |

**Tabelle 3: Zusammensetzung (in Gewichtsteilen) von Z10 bis Z14.**

| **Zusammensetzung** | **Z10** (Ref.) | **Z11** (Ref.) | **Z12** (Ref.) | **Z13** (Ref.) | **Z14** (Ref.) |
|---|---|---|---|---|---|
| Polymer **P3** | 20 | 15 | 14 | 14 | 14 |
| Polymer **P4** | 40 | 40 | 31 | 41 | 36 |
| DIDP | - | - | 15 | - | - |
| Weichmacher **PL1** | - | 5 | - | - | - |
| Diol 12200 | - | - | - | 5 | 10 |
| Isocyanurat **I1** | 2 | 2 | 2 | 2 | 2 |
| Trockungsmittel ⁴ | 0.1 | 0.1 | 0.1 | 0.1 | 0.1 |
| Russ ¹ | 20 | 20 | 20 | 20 | 20 |
| Kaolin ² | 17 | 17 | 17 | 17 | 17 |
| Katalysator ³ | 0.8 | 0.8 | 0.8 | 0.8 | 0.8 |

| | | | | | |
|---|---|---|---|---|---|
| ¹ Monarch 570 (von Cabot) ² White Tex (von BASF) ³ 2,2'-Dimorpholinodiethylether und Dibutylzinndilaurat (10:1 Gewichtsverhältnis als Mischung zu 10 Gewichts-% in DIDP) ⁴ p-Toluolsulfonylisocyanat | | | | | |

**Tabelle 4: Messresultate mit mechanischen Daten.**

| **Zusammensetzung** | **Z4** (Ref.) | **Z5** | **Z6** | **Z7** (Ref.) | **Z1** | **Z3** (Ref.) |
|---|---|---|---|---|---|---|
| Zugfestigkeit 7d NK [MPa] | 10.3 | 10.2 | 11 | 11.2 | 10.1 | 10 |
| Zugfestigkeit 7d 90°C [MPa] | 10.9 | 10.3 | 10.9 | 10.4 | 9 | 8.8 |
| E-Modul 7d NK [MPa] | 6.7 | 9.4 | 7.4 | 7.8 | 8.2 | 8.3 |
| E-Modul 7d 90°C [MPa] | 6 | 8.6 | 6.7 | 7.1 | 7.4 | 7.5 |
| Bruchdehnung 7d NK [%] | 494 | 308 | 454 | 476 | 447 | 454 |
| Bruchdehnung 7d 90°C [%] | 528 | 329 | 458 | 435 | 408 | 412 |
| G-Modul 7d NK [MPa] | 2.2 | 3.1 | 2.4 | 2.5 | 3 | 3.1 |

Aus der Tabelle 4 ist ersichtlich, dass die erfindungsgemässen Zusammensetzungen **Z1, Z5** und **Z6** ausgezeichnete mechanische Werte aufweisen, welche auch nach Hitzelagerung bestehen bleiben, was für eine ausgezeichnete Hitzestabilität spricht. Die Vergleichsversuche mit konventionellen Weichmachern sind mechanisch höchstens gleichwertig. Vergleichsversuch **Z4** weist zu niedrige E-Modul- und G-Modul-Werte auf.

**Tabelle 5: Resultate der Adhäsionstests (Werte in % kohäsivem Bruch). «n/m»**

| **Zusammensetzung** | 7d RT ^{1, 2} | 7d 40°C ^{1, 2} | 14d 40°C ^{1, 2} | 21d 40°C ^{1, 2} |
|---|---|---|---|---|
| | | 100% r.h. | 100% r.h. | 100% r.h. |
| **Z4** (Ref.) | 30 | 0 | 0 | 0 |
| **Z5** | 100 | 100 | 100 | 100 |
| **Z6** | 100 | 100 | 100 | n/m |
| **Z7** (Ref.) | 25 | 0 | 0 | 0 |
| **Z8** (Ref.) | 25 | 0 | 0 | n/m |
| **Z9** (Ref.) | 0 | 0 | 0 | n/m |
| **Z10** (Ref.) | 0 | 0 | 0 | n/m |
| **Z11** (Ref.) | 0 | 0 | 0 | n/m |
| **Z12** (Ref.) | 20 | 15 | 5 | n/m |
| **Z13** (Ref.) | 5 | 0 | 0 | n/m |
| **Z14** (Ref.) | 15 | 0 | 0 | n/m |

| | | | | |
|---|---|---|---|---|
| bedeutet, dass der Wert nicht gemessen wurde. ¹ Substrat (Lack): iGloss^{®} HAPS (BASF) Vorbehandlung: Heptan (wipe on/wipe off) ² Offenzeit: 5 min | | | | |

**Tabelle 6: Resultate der Adhäsionstests (Werte in % kohäsivem Bruch).**

| **Zusammensetzung** | Substrat (Lack) ^{1, 2} | 7d RT | 14d RT | 7d 40°C 100% r.h. | 14d 40°C 100% r.h. | 21d 40°C 100% r.h. |
|---|---|---|---|---|---|---|
| **Z1** (Ref.) | Axalta^{®} Lumeera overbaked (Axalta) | 75 | 20 | 20 | 90 | 70 |
| **Z2** | | 100 | 100 | 80 | 100 | 95 |
| **Z3** | | 90 | 100 | 100 | 100 | 100 |
| **Z1** (Ref.) | iGloss^{®} overbaked (BASF) | 85 | 60 | 70 | 70 | 70 |
| **Z2** | | 100 | 95 | 70 | 85 | 85 |
| **Z3** | | 100 | 100 | 95 | 95 | 95 |
| **Z1** (Ref.) | iGloss^{®} HAPS overbaked (BASF) | 100 | 100 | 80 | 75 | 65 |
| **Z2** | | 100 | 100 | 100 | 100 | 100 |
| **Z3** | | 100 | 100 | 100 | 100 | 100 |

| | | | | | | |
|---|---|---|---|---|---|---|
| ¹ Vorbehandlung: Heptan (wipe on/wipe off) ² Offenzeit: 2 min | | | | | | |

Die Daten in Tabellen 5 und 6 zeigen, dass nur die erfindungsgemässen Zusammensetzungen auf den schwierig zu verklebenden, hochkratzfesten Automobillacken ausreichend haften. Dabei verlieren sie selbst nach Wärmelagerung die Adhäsion nicht.

## Patentansprüche

1. Feuchtigkeitshärtende, einkomponentige Polyurethan-Zusammensetzung enthaltend
- mindestens ein Isocyanatgruppen-haltiges Polyetherurethan-Polymer erhalten aus der Umsetzung von mindestens einem Polyisocyanat mit mindestens einem Polyetherpolyol;
- mindestens ein Isocyanurat-haltiges Trimer I von 1-Isocyanato-3,3,5-trimethyl-5-isocyanatomethylcyclohexan oder 1,6-Hexandiisocyanat in einer Menge enthalten in der Zusammensetzung von zwischen 1 und 4 Gewichts-%;
- mindestens ein Polyether mit blockierten Hydroxylgruppen, welcher frei ist von Isocyanatgruppen, als Weichmacher, in einer Menge enthalten in der Zusammensetzung von mehr als 5 Gewichts-%.

2. Polyurethan-Zusammensetzung gemäss Anspruch 1, **dadurch gekennzeichnet, dass** das Polyetherurethan-Polymer einen NCO-Gehalt im Bereich von 0.5 bis 6.0 Gewichts-% hat.

3. Polyurethan-Zusammensetzung gemäss einem der Ansprüche 1 bis 2, **dadurch gekennzeichnet, dass** das mindestens eine Isocyanatgruppen-haltige Polyetherurethan-Polymer einen Gehalt an monomeren Diisocyanaten von höchstens 0.5 Gewichts-% aufweist und hergestellt ist aus der Umsetzung von mindestens einem monomeren Diisocyanat mit mindestens einem Polyetherpolyol in einem NCO/OH-Verhältnis von mindestens 3/1 und nachfolgender Entfernung eines Grossteils der monomeren Diisocyanate mittels eines geeigneten Trennverfahrens und die Polyurethan-Zusammensetzung einen Gehalt an monomeren Diisocyanaten von höchstens 0.1 Gewichts-% aufweist.

4. Polyurethan-Zusammensetzung gemäss einem der Ansprüche 1 bis 3, **dadurch gekennzeichnet, dass** das für die Umsetzung verwendete Polyisocyanat ein monomeres Diisocyanat ist, ausgewählt aus 4,4'-Diphenylmethandiisocyanat, 2,4-Toluylendiisocyanat oder Gemische davon mit 2,6-Toluylendiisocyanat, 1-Isocyanato-3,3,5-trimethyl-5-isocyanatomethylcyclohexan oder 1,6-Hexandiisocyanat.

5. Polyurethan-Zusammensetzung gemäss einem der Ansprüche 1 bis 4, **dadurch gekennzeichnet, dass** höchstens 3.5 Gewichts-% Isocyanurat-haltiges Trimer **I** in der Zusammensetzung enthalten sind.

6. Polyurethan-Zusammensetzung gemäss einem der Ansprüche 1 bis 5, **dadurch gekennzeichnet, dass** die blockierten Hydroxylgruppen ausgewählt sind aus Ester-, Acetoester-, Carbonat-, Acetal- und Urethangruppen.

7. Polyurethan-Zusammensetzung gemäss einem der Ansprüche 1 bis 6, **dadurch gekennzeichnet, dass** die Zusammensetzung zwischen 15 und 30 Gewichts-% Russ enthält, bezogen auf die gesamte Zusammensetzung.

8. Polyurethan-Zusammensetzung gemäss einem der Ansprüche 1 bis 7, **dadurch gekennzeichnet, dass** der Polyether mit blockierten Hydroxylgruppen abgeleitet ist von einem hydroxyfunktionellen Polyether mit einer mittleren OH-Funktionalität im Bereich von 1 bis 3.

9. Polyurethan-Zusammensetzung gemäss einem der Ansprüche 1 bis 8, **dadurch gekennzeichnet, dass** der Polyether mit blockierten Hydroxylgruppen ein mittleres Molekulargewicht Mₙ im Bereich von 600 bis 15'000 g/mol, bestimmt mittels Gelpermeationschromatographie (GPC) gegen Polystyrol als Standard mit Tetrahydrofuran als mobiler Phase, Brechungsindex-Detektor und Auswertung ab 200 g/mol, aufweist.

10. Polyurethan-Zusammensetzung gemäss einem der Ansprüche 1 bis 9, **dadurch gekennzeichnet, dass** sie 6 bis 25 Gewichts-% Polyether mit blockierten Hydroxylgruppen enthält.

11. Polyurethan-Zusammensetzung gemäss einem der Ansprüche 1 bis 10, **dadurch gekennzeichnet, dass** sie zusätzlich mindestens einen weiteren Weichmacher, insbesondere ein Phthalat, enthält, bevorzugt in einer Menge von zwischen 1 und 10 Gewichts-%, bezogen auf die gesamte Zusammensetzung.

12. Polyurethan-Zusammensetzung gemäss einem der Ansprüche 1 bis 11, **dadurch gekennzeichnet, dass** sie
- 35 bis 60 Gewichts-% Isocyanatgruppen-haltiges Polyetherurethan-Polymer;
- 6 bis 25 Gewichts-% Polyether mit blockierten Hydroxylgruppen;
- 0 bis 15 Gewichts-% weitere Weichmacher, insbesondere Phthalate,
- 1 bis 3.5 Gewichts-% Isocyanurat-haltiges Trimer I;
- 20 bis 60 Gewichts-% Füllstoffe, insbesondere umfassend Russ;
und gegebenenfalls weitere Bestandteile enthält.

13. Verfahren zum Verkleben oder Abdichten, umfassend die Schritte
(i) Applizieren der Polyurethan-Zusammensetzung gemäss einem der Ansprüche 1 bis 12
- auf ein erstes Substrat und Kontaktieren der Zusammensetzung mit einem zweiten Substrat innerhalb der Offenzeit der Zusammensetzung, oder
- auf ein erstes und auf ein zweites Substrat und Fügen der beiden Substrate innerhalb der Offenzeit der Zusammensetzung, oder
- zwischen zwei Substrate,
(ii) Aushärten der Zusammensetzung durch Kontakt mit Feuchtigkeit.

14. Verfahren gemäss Anspruch 13, **dadurch gekennzeichnet, dass** eines der Substrate eine mit Automobillack lackierte Oberfläche ist und vor dem Applizieren der Polyurethan-Zusammensetzung ausser einer optionalen Reinigung keine Vorbehandlung an diesem Substrat durchgeführt wird.

15. Artikel, erhalten aus dem Verfahren gemäss einem der Ansprüche 13 oder 14.

## Claims

1. Moisture-curing one-component polyurethane composition comprising
- at least one polyether urethane polymer containing isocyanate groups that has been obtained from the reaction of at least one polyisocyanate with at least one polyether polyol;
- at least one isocyanurate-containing trimer **I** of 1-isocyanato-3,3,5-trimethyl-5-isocyanatomethylcyclohexane or hexane 1,6-diisocyanate in an amount present in the composition of between 1% and 4% by weight;
- at least one polyether having blocked hydroxyl groups which is free of isocyanate groups as plasticizer, in an amount present in the composition of more than 5% by weight.

2. Polyurethane composition according to Claim 1, **characterized in that** the polyether urethane polymer has an NCO content in the range from 0.5% to 6.0% by weight.

3. Polyurethane composition according to either of Claims 1 and 2, **characterized in that** the at least one polyether urethane polymer containing isocyanate groups has a monomeric diisocyanate content of not more than 0.5% by weight and has been prepared from the reaction of at least one monomeric diisocyanate with at least one polyether polyol in an NCO/OH ratio of at least 3/1 and subsequent removal of a majority of the monomeric diisocyanates by means of a suitable separation process, and the polyurethane composition has a monomeric diisocyanate content of not more than 0.1% by weight.

4. Polyurethane composition according to any of Claims 1 to 3, **characterized in that** the polyisocyanate used for the reaction is a monomeric diisocyanate selected from diphenylmethane 4,4'-diisocyanate, tolylene 2,4-diisocyanate or mixtures thereof with tolylene 2,6-diisocyanate, 1-isocyanato-3,3,5-trimethyl-5-isocyanatomethylcyclohexane or hexane 1,6-diisocyanate.

5. Polyurethane composition according to any of Claims 1 to 4, **characterized in that** not more than 3.5% by weight of isocyanurate-containing trimer **I** is present in the composition.

6. Polyurethane composition according to any of Claims 1 to 5, **characterized in that** the blocked hydroxyl groups are selected from ester, aceto ester, carbonate, acetal and urethane groups.

7. Polyurethane composition according to any of Claims 1 to 6, **characterized in that** the composition contains between 15% and 30% by weight of carbon black, based on the overall composition.

8. Polyurethane composition according to any of Claims 1 to 7, **characterized in that** the polyether having blocked hydroxyl groups is derived from a hydroxy-functional polyether having an average OH functionality in the range from 1 to 3.

9. Polyurethane composition according to any of Claims 1 to 8, **characterized in that** the polyether having blocked hydroxyl groups has an average molecular weight Mₙ in the range from 600 to 15 000 g/mol, determined by means of gel permeation chromatography (GPC) versus polystyrene as standard with tetrahydrofuran as mobile phase, refractive index detector and evaluation from 200 g/mol.

10. Polyurethane composition according to any of Claims 1 to 9, **characterized in that** it contains 6% to 25% by weight of polyether having blocked hydroxyl groups.

11. Polyurethane composition according to any of Claims 1 to 10, **characterized in that** it additionally contains at least one further plasticizer, especially a phthalate, preferably in an amount of between 1% and 10% by weight, based on the overall composition.

12. Polyurethane composition according to any of Claims 1 to 11, **characterized in that** it contains
- 35% to 60% by weight of polyether urethane polymer containing isocyanate groups;
- 6% to 25% by weight of polyether having blocked hydroxyl groups;
- 0% to 15% by weight of further plasticizers, especially phthalates;
- 1% to 3.5% by weight of isocyanurate-containing trimer **I;**
- 20% to 60% by weight of fillers, especially comprising carbon black;
and optionally further constituents.

13. Method of bonding or sealing, comprising the steps of
(i) applying the polyurethane composition according to any of Claims 1 to 12
- to a first substrate and contacting the composition with a second substrate within the open time of the composition, or
- to a first and to a second substrate and joining the two substrates within the open time of the composition, or
- between two substrates,
(ii) curing the composition by contact with moisture.

14. Method according to Claim 13, **characterized in that** one of the substrates is a surface that has been painted with automotive paint and no pretreatment has been conducted on this substrate apart from optional cleaning prior to the application of the polyurethane composition.

15. Article obtained from the method according to either of Claims 13 and 14.

## Revendications

1. Composition de polyuréthane à un composant, durcissant à l'humidité, contenant
- au moins un polymère polyétheruréthane contenant des groupes isocyanate, obtenu par la réaction d'au moins un polyisocyanate avec au moins un polyétherpolyol ;
- au moins un trimère **I**, contenant de l'isocyanurate, de 1-isocyanato-3,3,5-triméthyl-5-isocyanatométhylcyclohexane ou 1,6-diisocyanato-hexane en une quantité contenue dans la composition comprise entre 1 et 4 % en poids ;
- au moins un polyéther à groupes hydroxy bloqués, qui est exempt de groupes isocyanate, en tant que plastifiant, en une quantité contenue dans la composition de plus de 5 % en poids.

2. Composition de polyuréthane selon la revendication 1, **caractérisée en ce que** le polymère polyétheruréthane à une teneur en NCO dans la plage de 0,5 à 6,0 % en poids.

3. Composition de polyuréthane selon l'une quelconque des revendications 1 et 2, **caractérisée en ce que** ledit au moins un polymère polyétheruréthane contenant des groupes isocyanate présente une teneur en diisocyanates monomères d'au maximum 0,5 % en poids et est préparé par la réaction d'au moins un diisocyanate monomère avec au moins un polyétherpolyol en un rapport NCO/OH d'au moins 3/1 et élimination subséquente d'une grande partie des diisocyanates monomères au moyen d'un procédé de séparation approprié et la composition de polyuréthane présente une teneur en diisocyanates monomères d'au maximum 0,1 % en poids.

4. Composition de polyuréthane selon l'une quelconque des revendications 1 à 3, **caractérisée en ce que** le polyisocyanate utilisé pour la réaction est un diisocyanate monomère, choisi parmi le 4,4'-diisocyanate de diphénylméthane, le 2,4-diisocyanate de toluylène ou des mélanges de ce dernier avec le 2,6-diisocyanate de toluylène, le 1-isocyanato-3,3,5-triméthyl-5-isocyanatométhylcyclohexane ou le 1,6-diisocyanatohexane.

5. Composition de polyuréthane selon l'une quelconque des revendications 1 à 4, **caractérisée en ce qu'**au maximum 3,5 % en poids de trimère **I** contenant de l'isocyanurate sont contenus dans la composition.

6. Composition de polyuréthane selon l'une quelconque des revendications 1 à 5, **caractérisée en ce que** les groupes hydroxy bloqués sont choisis parmi les groupes ester, acétoester, carbonate, acétal et uréthane.

7. Composition de polyuréthane selon l'une quelconque des revendications 1 à 6, **caractérisée en ce que** la composition contient entre 15 et 30 % en poids de noir de carbone, par rapport à la composition totale.

8. Composition de polyuréthane selon l'une quelconque des revendications 1 à 7, **caractérisée en ce que** le polyéther à groupes hydroxy bloqués est dérivé d'un polyéther à fonction hydroxy ayant une fonctionnalité OH moyenne dans la plage de 1 à 3.

9. Composition de polyuréthane selon l'une quelconque des revendications 1 à 8, **caractérisée en ce que** le polyéther à groupes hydroxy bloqués présente une masse moléculaire moyenne Mₙ dans la plage de 600 à 15 000 g/mole, déterminée par chromatographie par perméation de gel (GPC) contre du polystyrène en tant qu'étalon avec du tétrahydrofurane en tant que phase mobile, détecteur d'indice de réfraction et évaluation à partir de 200 g/mole.

10. Composition de polyuréthane selon l'une quelconque des revendications 1 à 9, **caractérisée en ce qu'**elle contient 6 à 25 % en poids de polyéther à groupes hydroxy bloqués.

11. Composition de polyuréthane selon l'une quelconque des revendications 1 à 10, **caractérisée en ce qu'**elle contient en outre au moins un plastifiant supplémentaire, en particulier un phtalate, de préférence en une quantité comprise entre 1 et 10 % en poids, par rapport à la composition totale.

12. Composition de polyuréthane selon l'une quelconque des revendications 1 à 11, **caractérisée en ce qu'**elle contient
- 35 à 60 % en poids de polymère polyétheruréthane contenant des groupes isocyanate ;
- 6 à 25 % en poids de polyéther à groupes hydroxy bloqués,
- 0 à 15 % en poids de plastifiants supplémentaires, phtalates en particulier,
- 1 à 3,5 % en poids de trimère I contenant de l'isocyanurate ;
- 20 à 60 % en poids de charges, comprenant en particulier du noir de carbone ;
et éventuellement d'autres constituants.

13. Procédé pour le collage ou l'étanchéification, comprenant les étapes
(i) application de la composition de polyuréthane selon l'une quelconque des revendications 1 à 12
- sur un premier support et mise en contact de la composition avec un deuxième support en l'espace du temps d'ouverture de la composition, ou
- sur un premier et sur un deuxième support et assemblage des deux supports en l'espace du temps d'ouverture de la composition, ou
- entre deux supports,
(ii) durcissement de la composition par contact avec de l'humidité.

14. Procédé selon la revendication 13, **caractérisé en ce que** l'un des supports est une surface peinte avec de la peinture pour automobile et aucun prétraitement, hormis un nettoyage optionnel, n'est effectué sur ce support avant l'application de la composition de polyuréthane.

15. Article, obtenu à partir du procédé selon l'une quelconque des revendications 13 et 14.
